# EUROPEAN PATENT APPLICATION

(11) **EP 4 682 029 A1**
(43) Date of publication of application: **21.01.2026**
(21) Application number: 25735793.9
(22) Date of filing: 24.03.2025
(51) Int. Cl.: B62D 21/15, B62D 25/20, F16F 7/12

(54) **VEHICULAR SHOCK ABSORBING MEMBER AND SIDE SILL STRUCTURE**

(30) Priority: 29.05.2024 JP 2024086767
(71) Applicant: G-Tekt Corporation, Saitama-city, Saitama 330-0854 (JP)
(72) Inventor: MIYABORI, Kazuya, Shioya-gun, Tochigi 329-1233 (JP); NOSHIRO, Makoto, Shioya-gun, Tochigi 329-1233 (JP); TOKUNAGA, Shoma, Shioya-gun, Tochigi 329-1233 (JP)
(74) Representative: Berghofer, Benedikt
(86) International application number: PCT/JP2025/011324
(87) International publication number: WO 2025/248930

(57) **Abstract**

An impact absorbing member (10) for a vehicle includes a beam member (20) of which a closed cross-section is continuous in a longitudinal direction, and a corrugated sheet member (30) that is disposed side by side with the beam member (20) on the inside of the beam member (20). The corrugated sheet member (30) is formed of a plurality of single-wave members each having a single wave and arranged side by side or is formed of a multi-wave member having a plurality of waves, and is disposed such that ridge lines (31) passing through peaks of the waves extend in a lateral direction. At least one of the beam member (20) and the corrugated sheet member (30) is made of a steel sheet.

## Description

### TECHNICAL FIELD

The present invention relates to an impact absorbing member for a vehicle that absorbs collision energy during a side collision and a side sill structure including the impact absorbing member for a vehicle.

### BACKGROUND ART

Various vehicle body structures coping with side collisions have been proposed (for example, see Patent Document 1 (FIG. 3)).

Patent Document 1 will be described with reference to the following drawing.

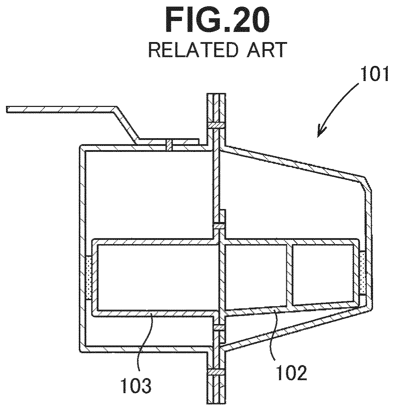

FIG. 20 is a cross-sectional view of an impact absorbing member for a vehicle in the related art.

As shown in FIG. 20, an outer reinforcing member 102 and an inner reinforcing member 103 are stored in a side sill 101 of a vehicle. When a side collision occurs, the outer reinforcing member 102 absorbs collision energy while being crushed and the inner reinforcing member 103 absorbs collision energy while being crushed, so that occupants are protected.

The outer reinforcing member 102 is formed of an extruded member having a closed cross-sectional structure and made of aluminum or an aluminum alloy (see Patent Document 1, Paragraph 0060).

Aluminum is sufficiently lighter than carbon steel. Therefore, according to a technique disclosed in Patent Document 1, the outer reinforcing member 102, that is, the impact absorbing member for a vehicle can be reduced in weight.

In addition, since aluminum is softened at a lower temperature than carbon steel, aluminum is easily used for extrusion molding. There is an advantage that an object having a relatively complex cross-section can be manufactured using extrusion molding.

On the other hand, aluminum is more expensive than carbon steel.

In addition, since the strength of aluminum is lower than the strength of carbon steel, it is difficult to make aluminum thin. For this reason, there is a drawback that the impact absorbing member for a vehicle is made thick and has a large size when aluminum is used.

As vehicles are increasingly required to have a compact size and low cost, there is a demand for an impact absorbing member for a vehicle that can be more easily made thin and manufactured at a lower cost than the outer reinforcing member 102 disclosed in Patent Document 1.

### CITATION LIST

### PATENT DOCUMENT

Patent Document 1: Japanese Patent No. 7191704

### DISCLOSURE OF THE INVENTION

### PROBLEM TO BE SOLVED BY THE INVENTION

An object of the invention is to provide an impact absorbing member for a vehicle that can be easily made thin and manufactured at a low cost.

### MEANS FOR SOLVING PROBLEM

According to the invention, there is provided an impact absorbing member for a vehicle that is disposed on an outside in a lateral direction when a front-rear direction of a vehicle is defined as a longitudinal direction, a left-right direction is defined as the lateral direction, a side close to a center of gravity of the vehicle is defined as an inside, and a side far from the center of gravity is defined as the outside as viewed from a driver's seat. The impact absorbing member for a vehicle includes a beam member of which a closed cross-section is continuous in the longitudinal direction and a corrugated sheet member that is disposed side by side with the beam member on the inside of the beam member. The corrugated sheet member is formed of a plurality of single-wave members each having a single wave and arranged side by side or is formed of a multi-wave member having a plurality of waves, and is disposed such that ridge lines passing through peaks of the waves extend in the lateral direction, and at least one of the beam member and the corrugated sheet member is made of a steel sheet.

### EFFECT OF THE INVENTION

According to the invention, during a side collision, the beam member is subjected to plastic deformation (bending deformation) and the corrugated sheet member is then subjected to plastic deformation (buckling deformation) in a continuous direction of a wavy cross-section. Since a collision force is distributed in the longitudinal direction due to the presence of the beam member, the number of corrugated sheet members to be plastically deformed is increased and the corrugated sheet members are plastically deformed over a relatively wide range. Since a collision force is distributed, it is possible to cope with a local collision such as a pole collision. Accordingly, it is possible to reduce the thickness of the corrugated sheet member and to reduce the amount of carbon dioxide to be discharged.

In addition, both or one of the beam member and the corrugated sheet member is made of a steel sheet. A steel sheet is sufficiently cheaper than an aluminum sheet.

As a result, the present invention provides an impact absorbing member for a vehicle that can be easily made thin and manufactured at a low cost.

### BRIEF DESCRIPTION OF DRAWINGS

FIG. 1 is a perspective view of an impact absorbing member for a vehicle according to the invention;
FIG. 2(a) to FIG. 2(e) are diagrams illustrating a method of manufacturing a beam member and FIG. 2(f) is a diagram illustrating a modification example of the beam member;
FIG. 3(a) to FIG. 3(e) are diagrams illustrating a form of a corrugated sheet member;
FIG. 4(a) is an exploded view of the impact absorbing member for a vehicle according to the invention, FIG. 4(b) is a side view of the impact absorbing member for a vehicle, FIG. 4(c) is a cross-sectional view taken along line c-c of FIG. 4(b), and FIG. 4(d) is a cross-sectional view taken along line d-d of FIG. 4(b);
FIG. 5 is a diagram illustrating a modification example of the impact absorbing member for a vehicle;
FIG. 6(a) to FIG. 6(d) are diagrams illustrating an action of the impact absorbing member for a vehicle according to the invention, in which FIG. 6(c) and FIG. 6(d) are diagrams illustrating an action according to an embodiment and FIG. 6(a) and FIG. 6(b) are diagrams illustrating a comparative example;
FIG. 7(a) to FIG. 7(c) are diagrams illustrating another action of the impact absorbing member for a vehicle;
FIG. 8(a) and FIG. 8(b) are cross-sectional views of a side sill structure according to the invention;
FIG. 9(a) and FIG. 9(b) are an exploded view and a cross-sectional view of another side sill structure;
FIG. 10(a) and FIG. 10(b) are cross-sectional views of still another side sill structure;
FIG. 11(a) and FIG. 11(b) are diagrams illustrating the beam member shown in FIG. 10(a) in detail;
FIG. 12(a) to FIG. 12(c) are diagrams illustrating an upper corrugated sheet member shown in FIG. 10(a) in detail, in which FIG. 12(a) is an exploded view, FIG. 12(b) is a diagram viewed in a direction of an arrow b-b of FIG. 12(a), and FIG. 12(c) is a cross-sectional view;
FIG. 13(a) to FIG. 13(c) are diagrams illustrating a lower corrugated sheet member shown in FIG. 10(a) in detail, in which FIG. 13(a) is an exploded view, FIG. 13(b) is a diagram viewed in a direction of an arrow b-b of FIG. 13(a), and FIG. 13(c) is a cross-sectional view;
FIG. 14 is a perspective view illustrating another modification example of the impact absorbing member for a vehicle;
FIG. 15(a) is a plan view of another modification example of the impact absorbing member for a vehicle and FIG. 15(b) is a cross-sectional view taken along line b-b of FIG. 15(a);
FIG. 16 is a cross-sectional view of another modification example of the impact absorbing member for a vehicle;
FIG. 17 is a cross-sectional view illustrating a modification example of the side sill structure according to the invention;
FIG. 18 is a diagram illustrating Gr and Gp in the impact absorbing member for a vehicle;
FIG. 19(a) and 19(b) are graphs showing impact absorption performance, in which FIG. 19(a) shows the comparative example and FIG. 19(b) shows the embodiment; and
FIG. 20 is a cross-sectional view of an impact absorbing member for a vehicle in the related art.

### BEST MODE(S) FOR CARRYING OUT THE INVENTION

Embodiments of the invention will be described below with reference to the accompanying drawings.

### [Description of terms]

- Side collision: this means a pole collision in which a utility pole or the like acts on the left or right side of a vehicle in the invention.
- Impact absorbing member for vehicle: this is a member absorbing collision energy by being plastically deformed during a side collision. The impact absorbing member for a vehicle may be stored in a side sill or disposed outside the side sill. For example, the impact absorbing member for a vehicle may be disposed in a side frame of a battery housing of an electric vehicle provided under a floor.
- Side sill: this is an element of a vehicle body and corresponds to a door sill for a side door.
- Panel: this refers to a panel made of metal. The metal may be any of carbon steel, an aluminum alloy, stainless steel, and other metals, and the type of metal does not matter.
- Groove-shaped bead: this is a groove formed on a panel by press forming. The word "groove-shaped" is used to distinguish the groove-shaped bead from a weld bead. The groove-shaped bead increases the strength and stiffness of a member to improve impact absorption performance, or is used to control a folding mode and a buckling mode.
- Weld metal: this is weld metal obtained from welding, and is a generic term for nuggets obtained from spot welding and beads formed by seam welding.
- Longitudinal direction: this refers to a front-rear direction as viewed from a driver's seat.
- Lateral direction: this refers to a left-right direction as viewed from a driver's seat.
- Inside: a side close to the center of gravity (a center in the lateral direction) of a vehicle as viewed from a driver's seat.
- Outside: a side far from the center of gravity (a center in the lateral direction) of a vehicle as viewed from a driver's seat. Outside opposite to inside.
- Closed cross-section: a closed cross-section such as a quadrangle. The shape of the closed cross-section is not limited to a quadrangular shape.
- Ridge line: a curved surface at a corner at which surfaces forming a corrugated sheet intersect with each other.
- Upper: an upper position based on an element disposed below
- Lower: a lower position based on an element disposed above
- For upper use: an element used in the upper position
- For lower use: an element used in the lower position

### [Embodiment]

### [Impact absorbing member for vehicle]

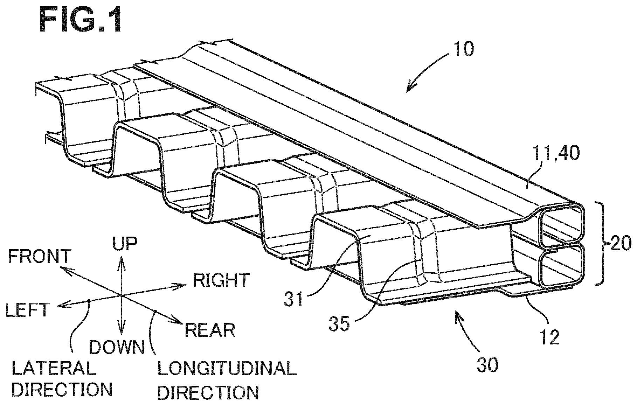

As shown in FIG. 1, an impact absorbing member 10 for a vehicle includes a beam member 20 of which the closed cross-section is continuous in the longitudinal direction, and a corrugated sheet member 30 that is disposed side by side with the beam member 20 on the inside of the beam member 20, as main elements. Ridge lines 31 of the corrugated sheet member 30 extend in the lateral direction.

Preferably, the beam member 20 and the corrugated sheet member 30 are connected to each other by an upper panel 11 and a lower panel 12. However, the upper panel 11 and the lower panel 12 are not essential.

### [Beam member]

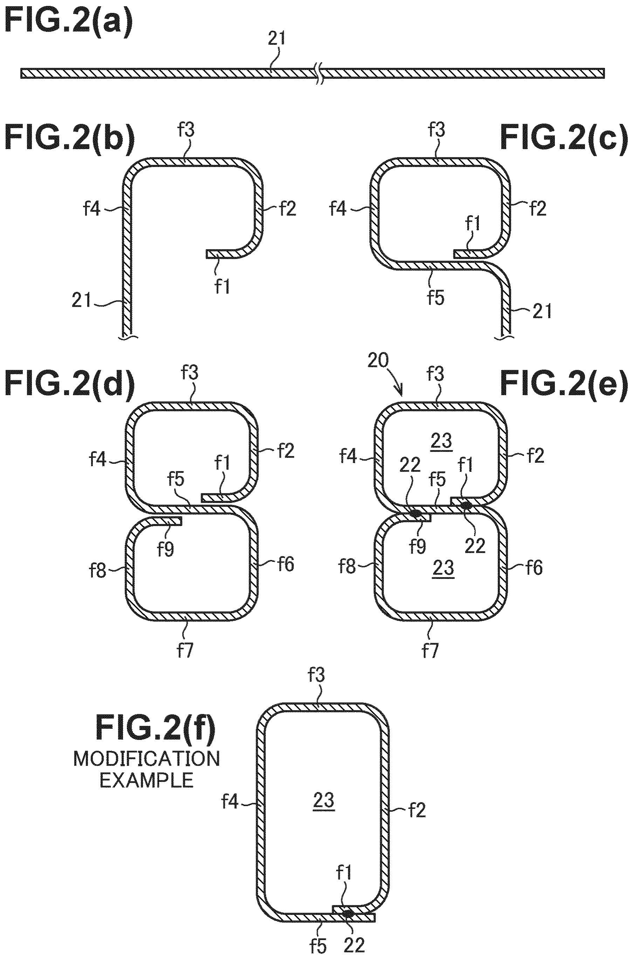

A preferred method of manufacturing the beam member 20 will be described with reference to FIG. 2(a) to FIG. 2(e).

As shown in FIG. 2(a), a blank material 21 is prepared. A thin sheet made of carbon steel is desirably used as the blank material 21, but a sheet made of an aluminum alloy may be used.

As shown in FIG. 2(b), the blank material 21 is bent around by roll forming to form a first surface f1, a second surface f2 orthogonal to the first surface f1, a third surface f3 orthogonal to the second surface f2, and a fourth surface f4 orthogonal to the third surface f3.

As shown in FIG. 2(c), a fifth surface f5 orthogonal to the fourth surface f4 is subsequently formed.

As shown in FIG. 2(d), a sixth surface f6 orthogonal to the fifth surface f5, a seventh surface f7 orthogonal to the sixth surface f6, an eighth surface f8 orthogonal to the seventh surface f7, and a ninth surface f9 orthogonal to the eighth surface f8 are subsequently formed.

As shown in FIG. 2(e), the first surface f1 and the fifth surface f5 are joined to each other with weld metal 22 and the fifth surface f5 and the ninth surface f9 are joined to each other with weld metal 22.

The first surface f1 corresponds to one end of the blank material 21, the ninth surface f9 corresponds to the other end of the blank material 21, and the fifth surface f5 corresponds to an intermediate partition wall.

That is, the beam member 20 is a structure that is formed by bending a single blank material 21 around and joining end portions (the first surface f1 and the ninth surface f9) to the intermediate partition wall (fifth surface f5).

This structure has two closed cross-sections 23 that are partitioned by the intermediate partition wall (fifth surface f5).

Meanwhile, the beam member 20 may be a structure having a quadrangular cross-section with one closed cross-section 23 as shown in FIG. 2(f).

That is, the beam member 20 includes first to fifth surfaces f1 to f5, and weld metal 22 that joins the first surface f1 to the fifth surface f5.

This beam member 20 is also a structure that is formed by bending a single blank material 21 around and joining an end portion (first surface f1) to the fifth surface f5.

### [Corrugated sheet member]

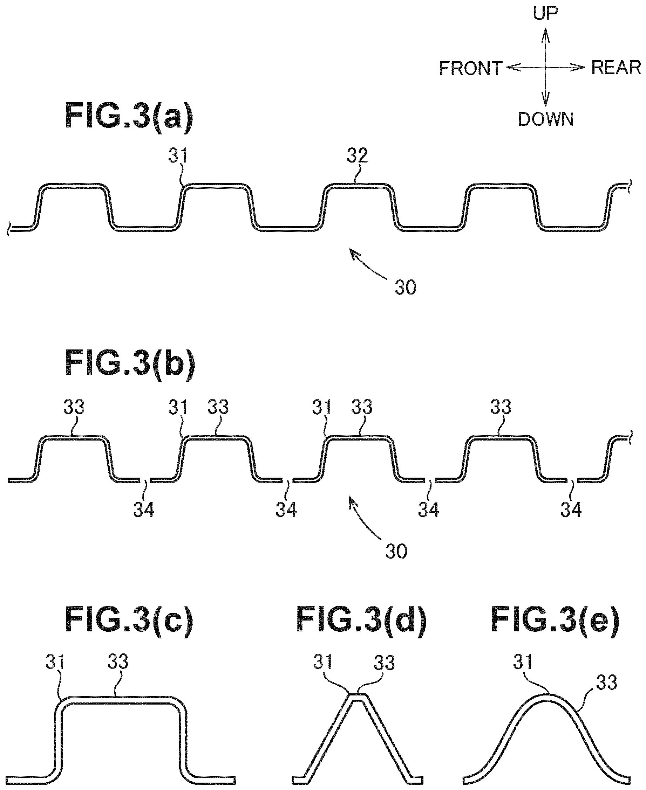

As shown in FIG. 3(a), the corrugated sheet member 30 may be a multi-wave member 32 having a plurality of waves.

A single blank material is plastically formed while being sandwiched between a pair of upper and lower forming rolls, so that this multi-wave member 32 is obtained. A thin sheet made of carbon steel is desirably used as the blank material, but a sheet made of an aluminum alloy may be used. Roll forming is well-suited for mass production.

Further, as shown in FIG. 3(b), the corrugated sheet member 30 may be formed of a plurality of single-wave members 33 each having a single wave and arranged side by side.

A blank material is plastically formed while being sandwiched between a pair of upper and lower dies, so that the single-wave member 33 is obtained. Die forming is better suited for small-volume production than roll forming.

In this example, a gap 34 is provided between adjacent single-wave members 33, but adjacent single-wave members 33 may be connected by welding. When the adjacent single-wave members 33 are connected by welding, the corrugated sheet member 30 has the same shape as the multi-wave member 32.

Meanwhile, in both FIG. 3(a) and FIG. 3(b), the ridge lines 31 passing through the peaks of the waves extend in a front-back direction of the drawing. The front-back direction of the drawing corresponds to "lateral direction". That is, as shown in FIG. 1, the ridge lines 31 extend in the lateral direction.

In FIG. 3(a) and FIG. 3(b), the wave is a trapezoidal wave.

However, the wave may be a rectangular wave shown in FIG. 3(c), a triangular wave shown in FIG. 3(d), or an arc wave shown in FIG. 3(e), and the form of the wave is not limited to the trapezoidal wave. When a groove-shaped bead (reference numeral 35 in FIG. 1) is formed on each surface, impact absorption energy during buckling deformation is increased.

### [Manufacture of impact absorbing member for vehicle]

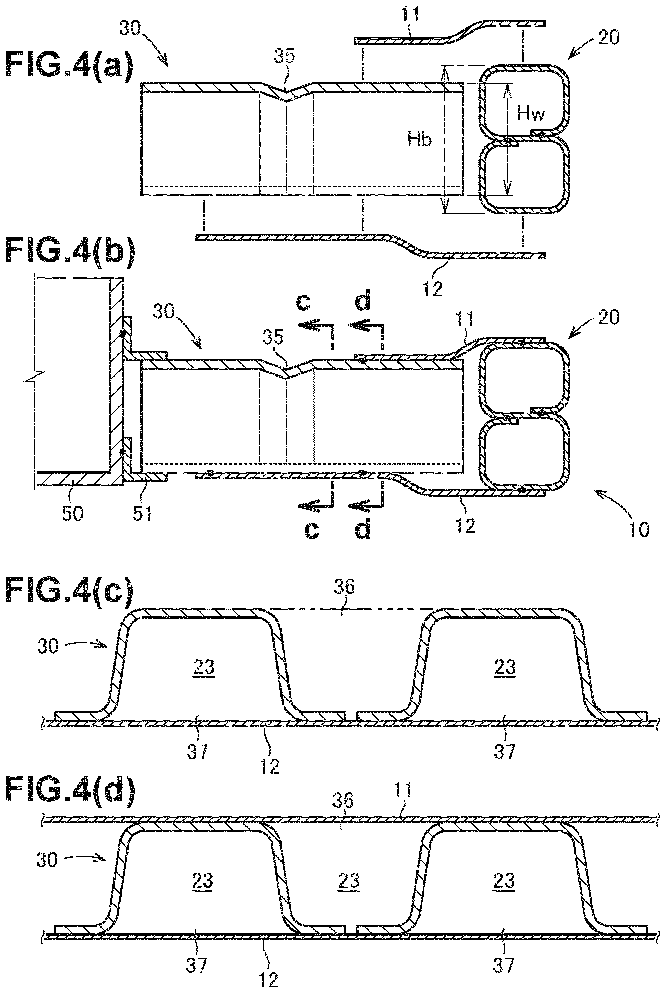

As shown in FIG. 4(a), the beam member 20, the corrugated sheet member 30, the upper panel 11, and the lower panel 12 are prepared. Preferably, the corrugated sheet member 30 is provided with groove-shaped beads 35 each of which goes around a corrugated cross-section in the middle of the corrugated sheet member in the lateral direction. A V-groove is preferably used as the groove, but a U-groove may be used.

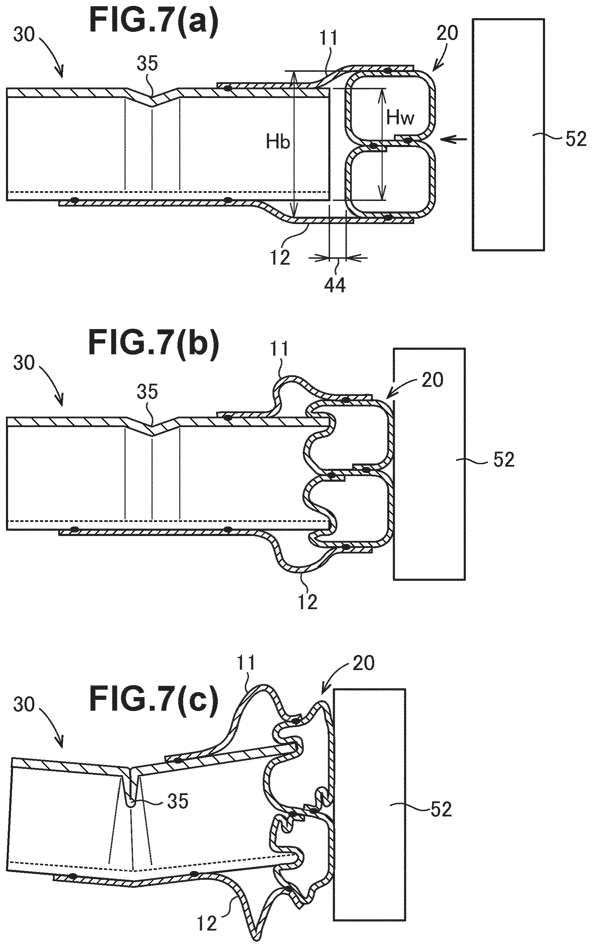

Meanwhile, when a height dimension of a surface of the corrugated sheet member 30 facing the beam member 20 is denoted by Hw and a height dimension of a surface of the beam member 20 facing the corrugated sheet member 30 is denoted by Hb, "Hw=Hb" may be satisfied and "Hw<Hb" is preferably satisfied. The reason for this will be described later with reference to FIG. 7(a) and FIG. 7(b).

As shown in FIG. 4(b), an upper portion of the beam member 20 and an upper portion of the corrugated sheet member 30 are connected to each other by the upper panel 11. A lower portion of the beam member 20 and a lower portion of the corrugated sheet member 30 are connected to each other by the lower panel 12. As a result, the impact absorbing member 10 for a vehicle is completed.

The completed impact absorbing member 10 for a vehicle may be connected to a battery storage case 50 using appropriate connecting members 51. Alternatively, the impact absorbing member 10 for a vehicle may be directly connected to the battery storage case 50.

According to this structure, the battery storage case 50 can be protected by the impact absorbing member 10 for a vehicle during a side collision.

Meanwhile, the widths of the upper panel 11 and the lower panel 12 in the lateral direction may be equal to each other or may be changed. For example, in the embodiment, the width of the lower panel 12 in the lateral direction is set to be larger than that of the upper panel 11.

FIG. 4(c) is a cross-sectional view taken along line c-c of FIG. 4(b).

As shown in FIG. 4(c), upper openings 36 of the corrugated sheet member 30 are open, but lower openings 37 thereof are closed by the lower panel 12, so that closed cross-sections 23 are formed. The buckling strength of the corrugated sheet member 30 is increased by a wide closed cross-section structure, so that impact energy absorption performance is improved.

FIG. 4(d) is a cross-sectional view taken along line d-d of FIG. 4(b).

As shown in FIG. 4(d), the upper openings 36 of the corrugated sheet member 30 are closed by the upper panel 11 and the lower openings 37 thereof are closed by the lower panel 12, so that the closed cross-sections 23 are doubled on a side facing beam member 20 (a portion close to the beam member 20). The doubled closed cross-section structure further increases the buckling strength of the corrugated sheet member 30 and distributes the bending deformation of the beam member 20 in the front-rear direction.

Meanwhile, the lengths of the upper panel 11 and the lower panel 12 in the lateral direction may be set to be the same. Further, the length of the upper panel 11 in the lateral direction is set to be long, and may be set to be shorter than that of the lower panel 12.

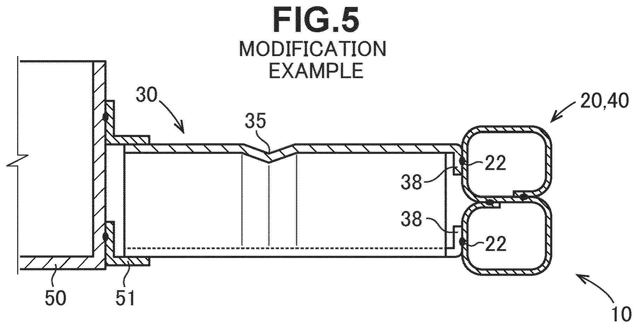

Furthermore, the beam member 20 and the corrugated sheet member 30 may be directly connected to each other without using the upper panel 11 and the lower panel 12. A specific example thereof will be described with reference to FIG. 5.

As shown in FIG. 5, tongue pieces 38 extend from the corrugated sheet member 30 and are bent at 90°. Then, the tongue pieces 38 are joined to the beam member 20 with weld metal 22, so that the impact absorbing member 10 for a vehicle is obtained.

### [Action of impact absorbing member for vehicle]

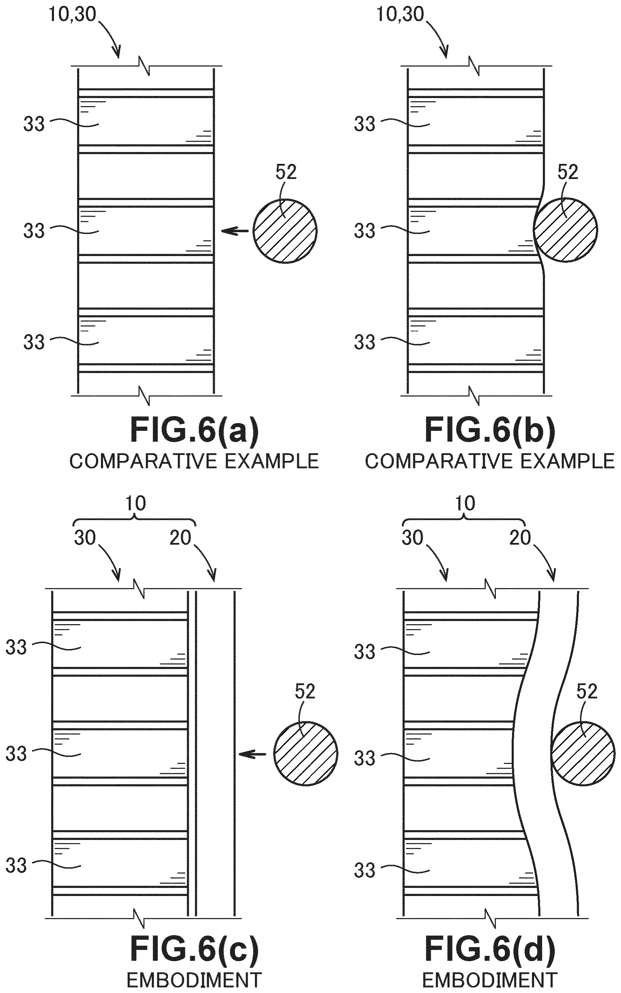

The action of the impact absorbing member 10 for a vehicle described above will be described with reference to FIG. 6(a) to FIG. 6(d).

FIG. 6(a) shows a comparative example. In this comparative example, the impact absorbing member 10 for a vehicle does not include the beam member and is formed of only the corrugated sheet member 30. A collision between the impact absorbing member 10 for a vehicle and a pole 52 will be examined.

As shown in FIG. 6(b), one single-wave member 33 of the corrugated sheet member 30 is subjected to concentrated plastic deformation.

In order to obtain predetermined buckling strength (buckling load), it is necessary to increase the sheet thickness of the single-wave member 33. Since the mass of the single-wave member 33 is increased when the sheet thickness is increased, the impact absorbing member 10 for a vehicle becomes heavy.

In the embodiment shown in FIG. 6(c), the impact absorbing member 10 for a vehicle includes the beam member 20 and the corrugated sheet member 30.

When the impact absorbing member 10 for a vehicle collides with a pole 52 as shown in FIG. 6(d), the beam member 20 is subjected to plastic deformation (bending deformation) first. The beam member 20 serves to distribute a collision force in the longitudinal direction. Next, the collision force is applied to the corrugated sheet member 30, but a plurality of (for example, three) single-wave members 33 are subjected to plastic deformation (buckling deformation).

Since buckling strength (buckling load) per single-wave member 33 is reduced, the sheet thickness of the single-wave member 33 may be reduced. Since the mass of the single-wave member 33 is reduced as the sheet thickness of the single-wave member 33 is reduced, the impact absorbing member 10 for a vehicle becomes light.

### [Height dimension of beam member]

Preferably, as shown in FIG. 7(a), the height dimension Hb of the surface of the beam member 20 facing the corrugated sheet member 30 is set to be larger than the height dimension Hw of the surface of the corrugated sheet member 30 facing the beam member 20.

As shown in FIG. 7(b), the corrugated sheet member 30 is embedded in the middle portion of the beam member 20 in a height direction in an initial stage during a side collision. Then, since the beam member 20 is restrained by the corrugated sheet member 30, the beam member 20 is not moved up or down. As a result, collision energy is preferably absorbed.

### [Action of groove-shaped bead]

As shown in FIG. 7(a) to FIG. 7(c), as impact absorption progresses, the corrugated sheet member 30 is folded in a V-shape due to the presence of the groove-shaped bead 35. The absorption of collision energy is promoted by this folding.

In FIG. 7(c), the V-shape (groove-shaped bead 35) on the upper surface of the corrugated sheet member 30 serves as the starting point for folding, and then the V-shaped folding on the side surface of the cross-section progresses and all the ridge lines (reference numeral 31 in FIG. 1) of the corrugated sheet member 30 buckle in parallel to the direction of the cross-sectional (lateral direction), so that an impact can be absorbed.

Generally, the impact absorption performance of the corrugated sheet member 30 is controlled depending on an increase or a reduction in the sheet thickness, the shape of the ridge lines, and an increase in the number of ridge lines through the addition of the grooves. On the other hand, when the positions of the groove-shaped beads 35, which intersect with the ridge lines (reference numeral 31 in FIG. 1), in the lateral direction or the shapes thereof are changed, the folding mode is controlled.

The impact absorbing member 10 for a vehicle according to the invention is recommended to be disposed on the outside of the battery storage case 50 as described with reference to FIG. 4(b), but is also recommended to be disposed in the side sill 61. A specific example of such a form will be described below.

### [Side sill structure]

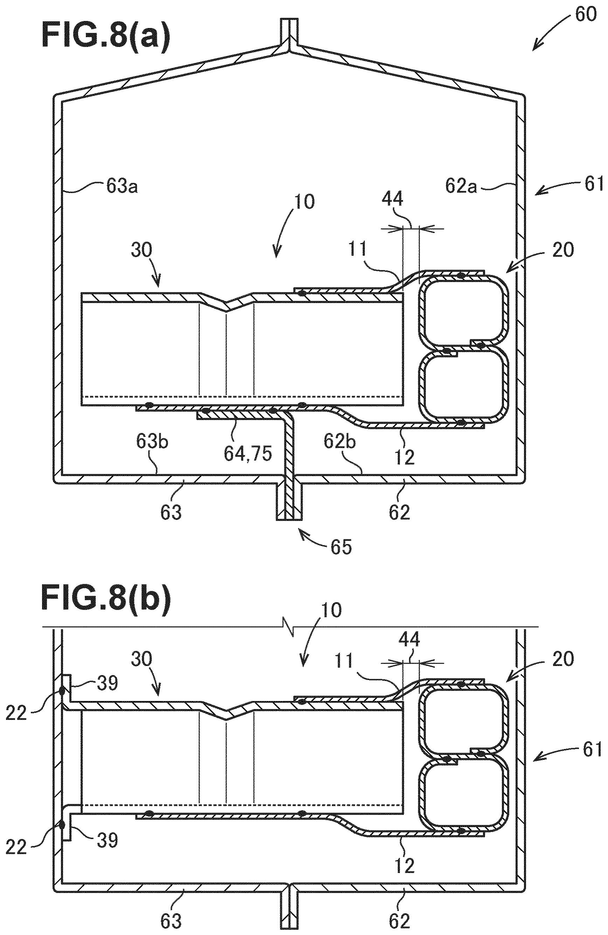

As shown in FIG. 8(a), a side sill structure 60 includes the impact absorbing member 10 for a vehicle and a side sill 61 that surrounds the impact absorbing member 10 for a vehicle. Further, the side sill 61 includes a side sill outer 62 that has a channel cross-section and is disposed on the outside, and a side sill inner 63 that has an inverted channel cross-section and is disposed on the inside. Furthermore, the beam member 20 faces a vertical side 62a of the side sill outer 62, the corrugated sheet member 30 faces a vertical side 63a of the side sill inner 63, and the side sill structure 60 is disposed along a pair of horizontal sides 62b and 63b continuing from the vertical sides 62a and 63a.

During a side collision, the side sill outer 62 is crushed, the beam member 20 is then crushed by bending deformation, and the corrugated sheet member 30 is subsequently crushed by buckling deformation in a continuous direction of the corrugated cross-section. Since a collision force is distributed by the beam member 20 and the corrugated sheet member 30 is plastically deformed over a relatively wide range as described with reference to FIG. 6(c) and FIG. 6(d), impact absorption performance is improved. As a result, objects (for example, a battery) present on the inside of the side sill inner 63 are effectively protected.

Meanwhile, the impact absorbing member 10 for a vehicle is spaced apart from a lower surface or an upper surface of the side sill 61 (the lower or upper pair of horizontal sides 62b and 63b forming the channel cross-sections of the side sill inner 63 and the side sill outer 62) via a gap, but may be adjacent to the lower surface or the upper surface.

When the impact absorbing member 10 for a vehicle is adjacent to the lower surface, the strength and stiffness of the lower portion of the side sill 61 are improved. When the impact absorbing member 10 for a vehicle is adjacent to the upper surface, the strength and stiffness of the upper portion of the side sill 61 are improved.

Further, when the impact absorbing member 10 for a vehicle is adjacent to the lower surface of the side sill 61, the bottom surface of the corrugated sheet member 30 follows the cross-sectional shape of the adjacent pair of horizontal sides 62b and 63b of the side sill 61 but a non-adjacent side (the upper surface of the corrugated sheet member 30) is not affected by the shape of the side sill 61. Since the upper surface of the corrugated sheet member 30 is not affected, ridge lines extending in the lateral direction are easily formed on the upper surface of the corrugated sheet member 30. The same applies to a case where the lower panel 12 is attached to the corrugated sheet member 30.

Furthermore, when the impact absorbing member 10 for a vehicle is adjacent to the upper surface of the side sill 61, the upper surface of the corrugated sheet member 30 follows the cross-sectional shape of an adjacent side of the side sill 61 but a non-adjacent side (the bottom surface of the corrugated sheet member 30) is not affected by the shape of the side sill 61. The same applies to a case where the upper panel 11 is attached to the corrugated sheet member 30.

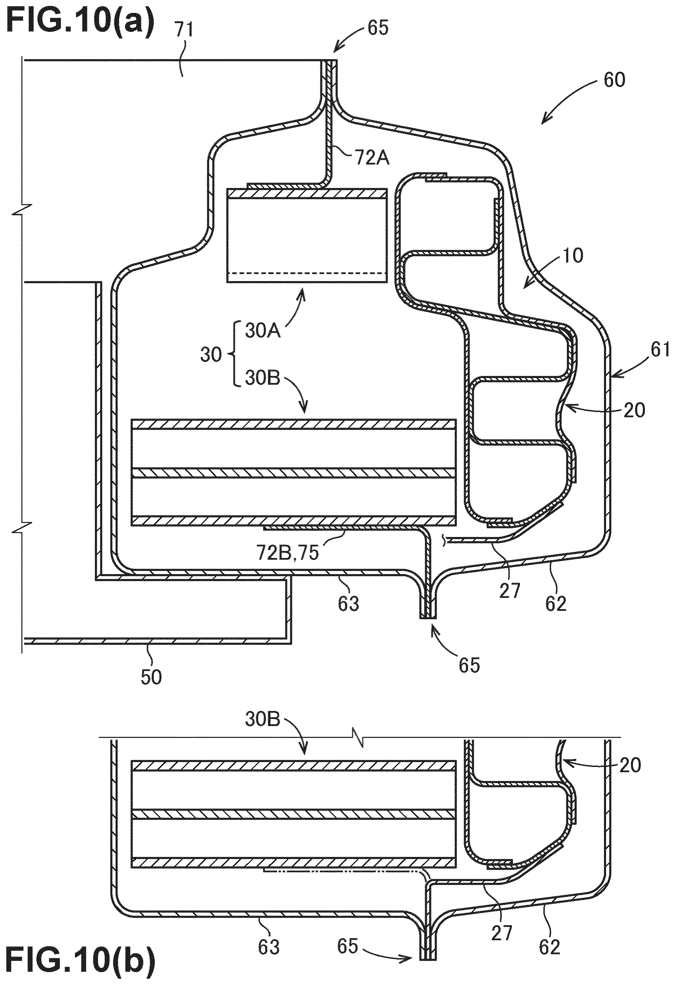

For example, the upper horizontal side of the side sill 61 has an inverted V-shape in FIG. 8(a). Accordingly, in a case where the impact absorbing member 10 for a vehicle is adjacent to the upper side, the upper side of the corrugated sheet member 30 follows the inverted V-shape and the lower side thereof follows a straight shape. When this lower ridge line is aligned with a vehicle body cross member (reference numeral 71 in FIG. 10(a)) in the lateral direction, occupants in a cabin can be protected from a side collision. In a case where the impact absorbing member 10 for a vehicle is adjacent to the lower side, the ridge line is aligned with a cross member of the battery storage case (reference numeral 50 in FIG. 10(a)).

During a side collision, the side sill outer 62 is crushed, the beam member 20 is then crushed, and the corrugated sheet member 30 is subsequently crushed. Since a collision force is distributed by the beam member 20 and the corrugated sheet member 30 is plastically deformed over a relatively wide range as described with reference to FIG. 6(c) and FIG. 6(d), impact absorption performance is improved. As a result, objects (for example, a battery) present on the inside of the side sill inner 63 are effectively protected.

In addition, as shown in FIG. 8(a), the side sill structure 60 includes: the impact absorbing member 10 for a vehicle; the upper panel 11 that extends from the upper portion of the corrugated sheet member 30 and is connected to the upper portion of the beam member 20; the lower panel 12 that closes the lower openings of the corrugated sheet member 30, extends in the lateral direction, and is connected to the lower portion of the beam member 20; the side sill 61 that surrounds the impact absorbing member 10 for a vehicle, the upper panel 11, and the lower panel 12; and a first bracket 64 that extends from the lower panel 12 and is connected to the side sill 61. The impact absorbing member 10 for a vehicle is mounted on the side sill 61 by the first bracket 64.

In FIG. 7(b), a force applied to the beam member 20 is transmitted to the corrugated sheet member 30 via the upper panel 11 and the lower panel 12 during a side collision. For this reason, the plastic deformation of the beam member 20 and the plastic deformation of the corrugated sheet member 30 can be made continuous, so that a smoother impact absorption action is achieved.

Preferably, as shown in FIG. 8(a), the first bracket 64 is sandwiched at a joint portion 65 between the side sill outer 62 and the side sill inner 63.

When the side sill outer 62 and the side sill inner 63 are joined to each other by welding, the first bracket 64 can be joined together. Welding man-hours can be reduced as compared to a case where the first bracket 64 is separately joined to the side sill 61.

Further, the first bracket 64 can be omitted. A specific example thereof will be described with reference to FIG. 8(b).

As shown in FIG. 8(b), second tongue pieces 39 extend inward from the corrugated sheet member 30, are bent at 90°, and are joined to an inner surface of the side sill inner 63 with weld metal 22.

Since the first bracket 64 is not necessary, the number of parts can be reduced and cost can be reduced.

Further, the impact absorbing member 10 for a vehicle can be disposed on an inner surface of the side sill 61 at any position in a vertical direction.

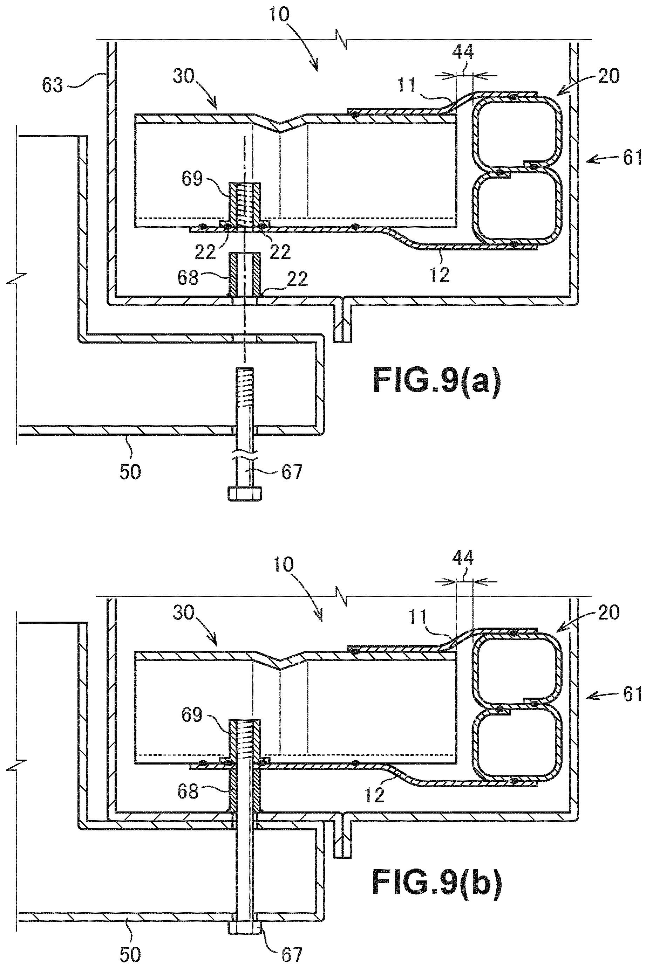

Furthermore, the first bracket 64 can be omitted through the use of another part. A specific example thereof will be described with reference to FIG. 9(a) and FIG. 9(b).

As shown in FIG. 9(a), a long bolt 67 for suspending the battery storage case 50, a tubular collar 68 through which this long bolt 67 passes, and a flanged nut 69 that screws onto the long bolt 67 are prepared.

The collar 68 is placed on an inner surface of the side sill inner 63, and is fixed to the inner surface with weld metal 22. Further, the flanged nut 69 is placed on the lower panel 12 and is fixed to the lower panel 12 with weld metal 22.

As shown in FIG. 9(b), the long bolt 67 is screwed into the flanged nut 69. As a result, the impact absorbing member 10 for a vehicle is fixed while being stored in the side sill 61.

According to this structure, the first bracket 64 and the second tongue pieces 39 are not necessary.

As described above, the impact absorbing member 10 for a vehicle shown in FIG. 1 is recommended to be disposed on the outside of the battery storage case 50 to protect the battery (see FIG. 4(b)).

In a vehicle not including the battery storage case 50 (non-electric vehicle), the impact absorbing member 10 for a vehicle can be provided to protect occupants by being built in the side sill 61.

In recent years, the spread of electric vehicles has been significant.

Therefore, the side sill structure 60 that can achieve both the protection of a battery and the protection of occupants is desired. A modification example that can meet this requirement will be described below.

### [Side sill structure according to modification example]

As shown in FIG. 10(a), a side sill structure 60 includes a side sill 61 and an impact absorbing member 10 for a vehicle that is built in the side sill 61, likewise.

However, the side sill structure 60 is disposed on the outside of a vehicle body cross member 71 and a battery storage case 50.

In this example, since a total height dimension of the vehicle body cross member 71 and the lower battery storage case 50 is sufficiently large, a beam member 20 is vertically long. Further, a corrugated sheet member 30 includes an upper corrugated sheet member 30A and a lower corrugated sheet member 30B.

As a result, the height dimension (exactly, an inner dimension) of the side sill 61 is at least twice the larger of the height dimension of the upper corrugated sheet member 30A and the height dimension of the lower corrugated sheet member 30B.

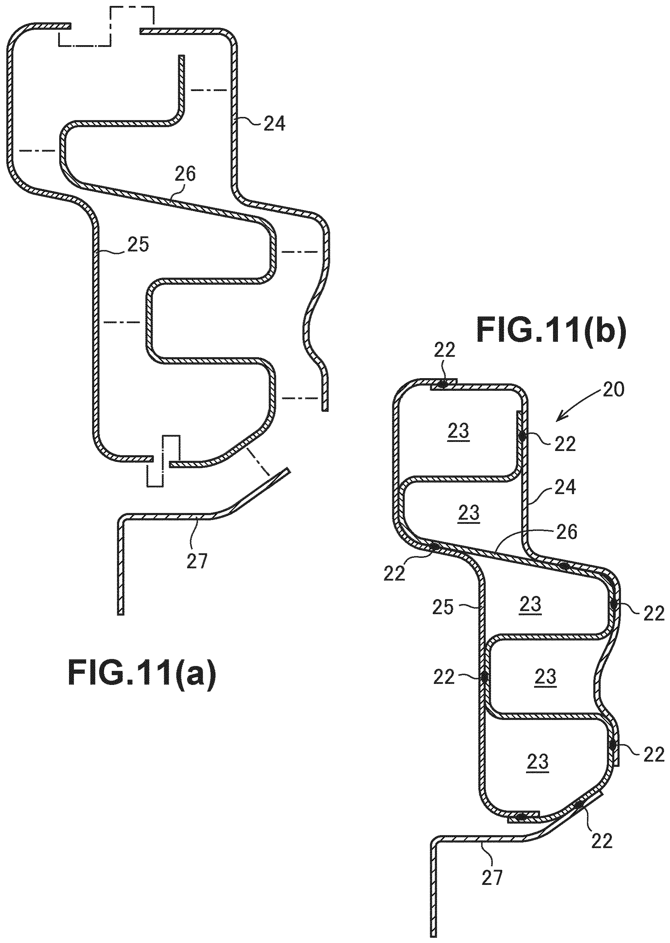

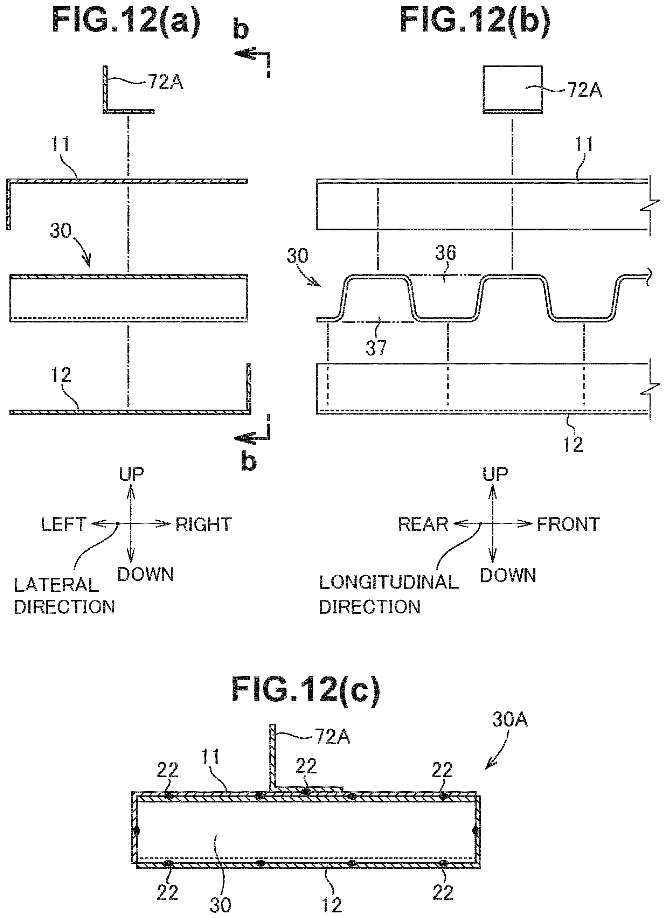

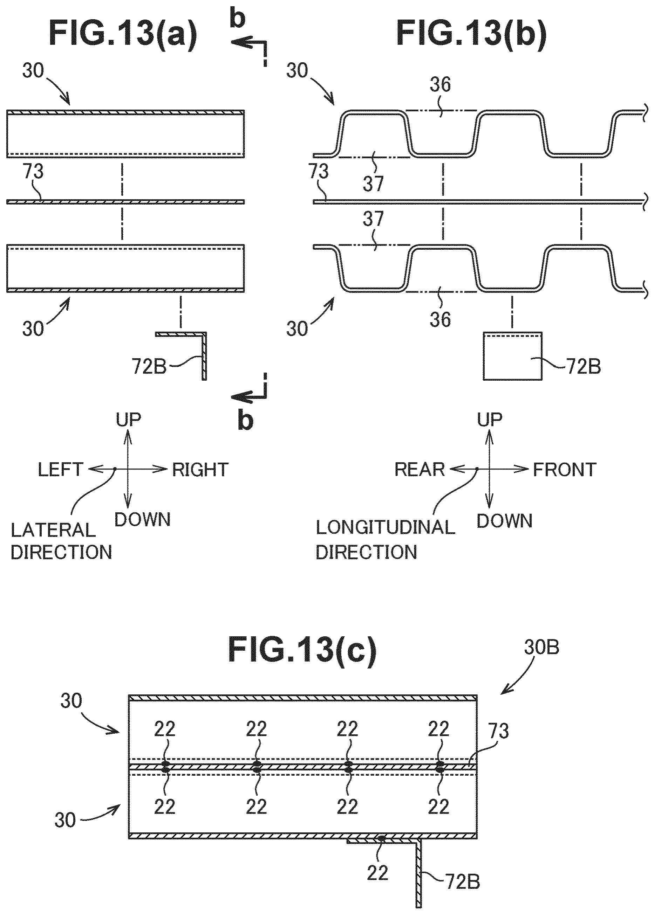

Details of the beam member 20 will be described with reference to FIG. 11(a) and FIG. 11(b), details of the upper corrugated sheet member 30A will be described with reference to FIG. 12(a) to FIG. 12(c), and details of the lower corrugated sheet member 30B will be described with reference to FIG. 13(a) to FIG. 13(c).

Further, FIG. 10(b) will be described later.

### [Beam member according to modification example]

The height dimension of the beam member 20 needs to be increased in the modification example.

Accordingly, as shown in FIG. 11(a), a vertically long first formed panel 24, a vertically long second formed panel 25, a third formed panel 26 that extends vertically while meandering, and a stay 27 are prepared.

The first formed panel 24 is obtained from the plastic deformation of a blank material, and is disposed on the outside.

The second formed panel 25 is obtained from the plastic deformation of a blank material, and is disposed on the inside.

The third formed panel 26 is obtained from the plastic deformation of a blank material into a meandering shape.

The stay 27 is an L-shaped member that is obtained from the plastic deformation of a blank material.

As shown in FIG. 11(b), the third formed panel 26 is joined to the second formed panel 25 with weld metal 22. Next, the first formed panel 24 is aligned with the second formed panel 25 to cover the third formed panel 26, and is appropriately joined with weld metal 22. Finally, the stay 27 is joined to the third formed panel 26 with weld metal 22.

As a result, the sufficiently vertically long beam member 20 having five closed cross-sections 23 is obtained.

A combination order, the number of welding points, and the positions of the welding points may be arbitrarily changed.

### [Upper corrugated sheet member]

FIG. 12(b) is a diagram viewed in a direction of an arrow b-b of FIG. 12(a).

As shown in FIG. 12(a) and FIG. 12(b), a corrugated sheet member 30, an upper panel 11, a lower panel 12, and a second bracket 72A for upper use are prepared.

As shown in FIG. 12(a), the upper panel 11 and the lower panel 12 have an L-shaped cross-section, the length of the L-shape in the lateral direction is substantially equal to the length of the corrugated sheet member 30 in the lateral direction, and the length of the L-shape in the vertical direction is substantially equal to the length of the corrugated sheet member 30 in the vertical direction.

As shown in FIG. 12(c), the corrugated sheet member 30 is sandwiched between the upper panel 11 and the lower panel 12 and is appropriately joined with welding metal 22. The second bracket 72A for upper use is joined to the upper panel 11.

As a result, the upper corrugated sheet member 30A is obtained.

Since upper openings 36 of the corrugated sheet member 30 are closed by the upper panel 11 and lower openings 37 thereof are closed by the lower panel 12 as shown in FIG. 12(b), a buckling load and bending stiffness are increased.

That is, according to this structure, the upper corrugated sheet member 30A is easily manufactured and the bending stiffness thereof is increased, so that the corrugated sheet member 30 can be buckled over a wide range as in FIG. 6(d).

### [Lower corrugated sheet member]

FIG. 13(b) is a diagram viewed in a direction of an arrow b-b of FIG. 13(a).

As shown in FIG. 13(a) and FIG. 13(b), a pair of corrugated sheet members 30, an intermediate sheet 73, and a second bracket 72B for lower use are prepared.

As shown in FIG. 13(c), the intermediate sheet 73 is sandwiched between the pair of corrugated sheet members 30 and is appropriately joined with weld metal 22. Then, the second bracket 72B for lower use is joined.

As a result, the lower corrugated sheet member 30B is obtained.

Since one of upper and lower openings 36 and 37 of each corrugated sheet member 30 are closed by the intermediate sheet 73, the buckling load and bending stiffness of each corrugated sheet member 30 are increased.

That is, according to this structure, the lower corrugated sheet member 30B is easily manufactured and the height dimension thereof can be easily increased. Since bending deformation caused by falling during buckling can be suppressed when the upper and lower cross-sections can be increased in size, buckling in the lateral direction can be promoted.

Next, description will be made with reference to FIG. 10(a) and FIG. 10(b).

The second bracket 72A for upper use is sandwiched at a joint portion 65 between a side sill outer 62 and a side sill inner 63 as shown in FIG. 10(a), so that the upper corrugated sheet member 30A is held in the side sill 61.

Similarly, the second bracket 72B for lower use is sandwiched at a joint portion 65 between the side sill outer 62 and the side sill inner 63, so that the lower corrugated sheet member 30B is held in the side sill 61.

FIG. 10(b) is a partial cross-sectional view at a position different from that in FIG. 10(a).

As shown in FIG. 10(b), the stay 27 is sandwiched at the joint portion 65 between the side sill outer 62 and the side sill inner 63, so that the beam member 20 is held in the side sill 61.

### [Another modification example]

Another modification example of the impact absorbing member 10 for a vehicle will be described below with reference to drawings.

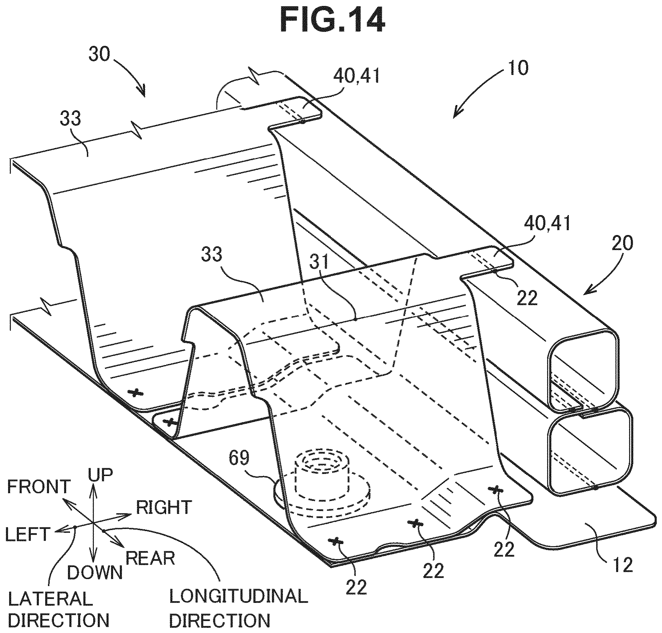

As shown in FIG. 14, an impact absorbing member 10 for a vehicle includes a beam member 20 of which the closed cross-section is continuous in the longitudinal direction, and a corrugated sheet member 30 that is disposed side by side with the beam member 20 on the inside of the beam member 20, as main elements.

### [Connecting member]

Further, an upper portion of the corrugated sheet member 30 is connected to the beam member 20 using connecting members 40. The connecting members 40 are, for example, third tongue pieces 41 protruding from the corrugated sheet member 30. Preferably, connection is performed using weld metal 22 obtained from seam welding. Connection is performed using weld metal 22 obtained from spot welding.

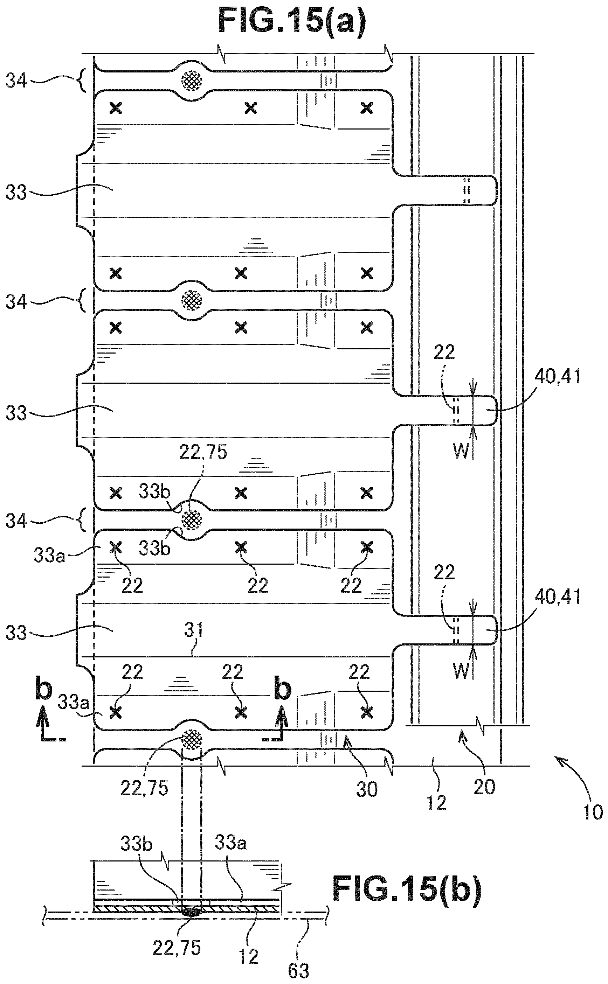

As shown in FIG. 15(a), ridge lines 31 of the corrugated sheet member 30 extend in the lateral direction. The corrugated sheet member 30 is formed of single-wave members 33 that are arranged while ensuring gaps 34 therebetween.

The single-wave member 33 includes flanges 33a at a portion thereof that is in contact with the lower panel 12. The flanges 33a are joined to the lower panel 12 with weld metal 22 obtained from spot welding.

As shown in FIG. 15(b), the lower panel 12 is joined to the side sill inner 63 with weld metal 22 obtained from spot welding at front and rear ends of the corrugated sheet member 30 or between adjacent corrugated sheet members 30.

In a case where spot welding is performed between adjacent corrugated sheet members 30, a semicircular notch 33b is formed at each flange 33a as shown in FIG. 15(a). Since the semicircular notches 33b are provided, a welding electrode for spot welding comes into contact with the lower panel 12 without interfering with the flange 33a as shown in FIG. 15(b).

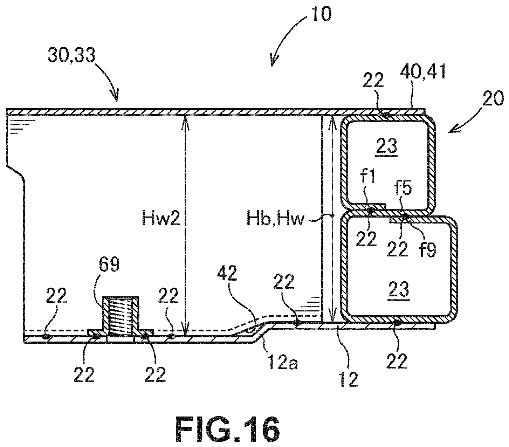

As shown in FIG. 16, a height dimension Hb of a surface of the beam member 20 facing the corrugated sheet member 30 is equal to a height dimension Hw of a surface of the corrugated sheet member 30 facing the beam member 20.

When a height dimension of a portion of the corrugated sheet member 30 sufficiently far from the beam member 20 is denoted by Hw2, a stepped portion 42 is provided on a bottom of the corrugated sheet member 30 such that the height dimension Hw2 is larger than the height dimension Hw of the surface of the corrugated sheet member 30 facing the beam member 20.

In this case, a stepped portion 12a may also be provided on the lower panel 12 and corresponds to the stepped portion 42 provided on the bottom of the corrugated sheet member 30.

### [Modification example of side sill structure]

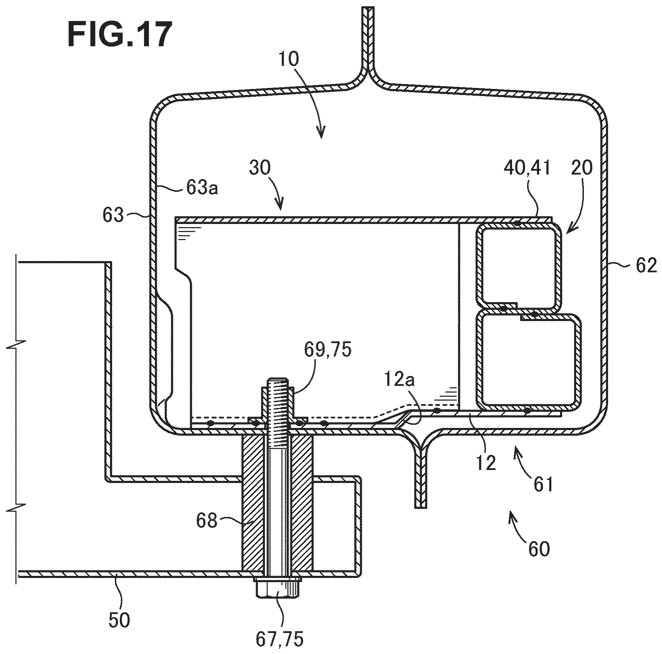

As shown in FIG. 17, a side sill structure 60 includes the impact absorbing member 10 for a vehicle and a side sill 61 surrounding the impact absorbing member 10 for a vehicle, and the corrugated sheet member 30 is connected to the side sill 61 with a vehicle body connecting unit 75. In addition, the corrugated sheet member 30 is also joined to the side sill 61 with the above-described weld metal 22. In this example, the vehicle body connecting unit 75 is formed of a flanged nut 69 and a long bolt 67 that is screwed into the flanged nut 69.

Preferably, a collar 68 is mounted on the battery storage case 50. The side sill structure 60 is placed on the collar 68. Then, the long bolt 67 is screwed into the flanged nut 69 while being inserted into the collar 68 from below. As a result, the battery storage case 50 is fixed to the impact absorbing member 10 for a vehicle together with the side sill 61.

The corrugated sheet member 30 is connected to the side sill 61 by this fixation. That is, the corrugated sheet member 30 is connected to the side sill 61 by the vehicle body connecting unit 75.

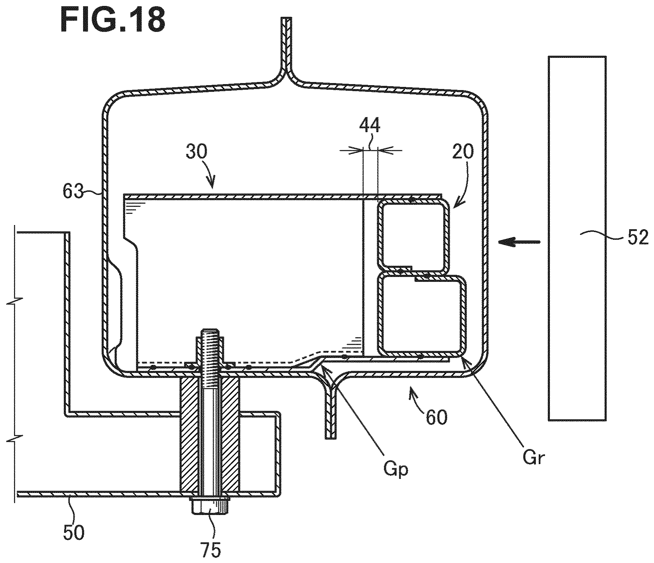

As shown in FIG. 18, a relative collision between a pole 52 and the side sill structure 60 will be examined.

As described above, during a pole collision, the beam member 20 is mainly subjected to bending deformation and the corrugated sheet member 30 is subjected to buckling deformation.

Here, a strength conversion value of the beam member 20 is denoted by Gr and a strength conversion value of the corrugated sheet member 30 is denoted by Gp.

Gr of the beam member 20 is defined as "(tensile strength of beam member 20) × (sheet thickness of beam member 20)". A unit of Gr is, for example, MPa·mm.

Further, Gp of the corrugated sheet member 30 is defined as "(tensile strength of corrugated sheet member 30) × (sheet thickness of corrugated sheet member 30)". A unit of Gp is, for example, MPa·mm.

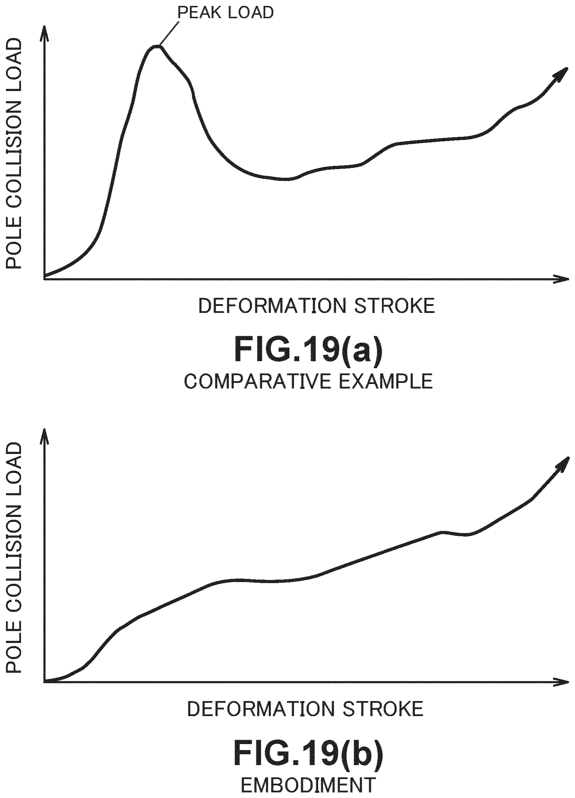

Preferably, Gr of beam member 20 is set to be larger than Gp of the corrugated sheet member 30. When "Gr>Gp" is set, the bending deformation of the beam member 20 and the buckling deformation of the corrugated sheet member 30 are balanced during a pole collision. An effect of this balance will be described with reference to FIG. 19(a) and FIG. 19(b).

FIG. 19(a) shows a comparative example in which "Gr<Gp" is set, and a horizontal axis represents a deformation stroke, and a vertical axis represents a pole collision load.

As shown in FIG. 19(a), in the initial stage of deformation, the beam member is subjected to small bending deformation due to low strength thereof and a load is concentrated on a few waves. As a result, a peak load is generated. It is desirable to reduce this peak load.

In contrast, when "Gr>Gp" is set, no peak load is generated as shown in FIG. 19(b). That is, in the initial stage of deformation, the beam member is subjected to large bending deformation due to high strength thereof and a load is distributed to many waves. As a result, no peak load is generated. Since an increase in average load (pole collision load) can be kept constant in a case where no peak load is generated, stable impact absorption performance is obtained.

As shown in FIG. 18, the beam member 20 as a bending deformation member is disposed on an input side (a side facing the pole 52), the corrugated sheet member 30 as a buckling deformation member is disposed on an output side, and a space 44 having a predetermined size is set between the beam member 20 and the corrugated sheet member 30. According to this setting, the space 44 can adjust the bending deformation of the beam member 20 and suppress the generation of a peak load.

When the space 44 is set between the beam member 20 and the corrugated sheet member 30 as shown in FIG. 7(a), the same effects as those in FIG. 18 are obtained.

Further, when a space 44 is set in FIG. 8(a) and FIG. 8(b) or FIG. 9(a) and FIG. 9(b), the same effects as those in FIG. 18 are obtained.

Further, as shown in FIG. 18, the beam member 20 as a bending deformation member and the corrugated sheet member 30 as a buckling deformation member are disposed in a lower portion of the side sill 61. As a result, the upper surfaces of the beam member 20 and the corrugated sheet member 30 can be aligned with the upper surface of the battery storage case 50. Therefore, the beam member 20, the corrugated sheet member 30, and the battery storage case 50 can be aligned with each other in the lateral direction, so that damage to the battery during a pole collision can be suppressed.

Further, as shown in FIG. 14, the corrugated sheet member 30 extends in a vehicle width direction (lateral direction) and is single-wave members 33 (waves) having a hat-shaped cross-section. Further, the plurality of single-wave members 33 are arranged on the lower panel 12, and are fixed with weld metal 22 obtained from spot welding. The single-wave member 33 having a hat-shaped cross-section and the lower panel 12 form a tubular body. In addition, the beam member 20 is a long hollow member.

The beam member 20 and the corrugated sheet member 30 are placed on and fixed to the common lower panel 12. A reduction in the weight of the beam member 20 and a reduction in the weight of the corrugated sheet member 30 can be achieved due to the presence of the lower panel 12. In addition, work for mounting the beam member 20 on the lower panel 12 is easy, and work for mounting the corrugated sheet member 30 on the lower panel 12 is easy.

Further, as shown in FIG. 16, the bottom surface of the beam member 20 and the bottom surface of the corrugated sheet member 30 are connected to each other by the lower panel 12 and the upper surface of the bean member 20 and the upper surface of the corrugated sheet member 30 are connected to each other by the third tongue pieces 41.

Since the beam member 20 is sandwiched between the lower panel 12 and the third tongue pieces 41, it is easy to connect the beam member 20 and the corrugated sheet member 30.

Incidentally, there is a case where it is necessary to match upper connection performance and lower connection performance.

As shown in FIG. 15, the upper connection performance is increased when the width W of the third tongue piece 41 is set to be large, and the upper connection performance is reduced when the width W of the third tongue piece 41 is set to be small.

As a result, even when the thickness of the lower panel 12 and the thickness (sheet thickness) of the third tongue piece 41 are different from each other in FIG. 16, it is possible to easily match the connection performance of the lower panel 12 and the connection performance of the third tongue pieces 41.

Further, as shown in FIG. 17, a portion of the lower panel 12 positioned on the outside of the stepped portion 12a (a side of the lower panel 12 facing the side sill outer 62) is raised by one step.

For this reason, when the side sill outer 62 is horizontally moved during assembly, the side sill outer 62 does not interfere with the lower panel 12. As a result, assembly work is easy.

Further, in FIG. 17, a downward force is applied to the flanged nut 69 by the long bolt 67. This downward force acts on the lower panel 12 as a bending force.

However, as shown in FIG. 14, the flanged nut 69 is disposed below the single-wave member 33 having a hat shape. The lower panel 12 is reinforced by the single-wave members 33. Since the flanged nut 69 is disposed on this reinforced portion, the lower panel 12 may be made thin.

Furthermore, the flanges 33a are provided with the semicircular notches 33b as shown in FIG. 15(a).

Two semicircular notches 33b are combined to form a circle. The electrode for spot welding passes through this circle.

Accordingly, the weld metal 22 of spot welding shown in FIG. 15(b) is easily formed.

In addition, since the semicircular notches 33b are provided, the size of the gap 34 between the flanges 33a can be reduced.

Further, in the beam member 20 shown in FIG. 16, the first surface f1 overlaps with the fifth surface f5 and the ninth surface f9 overlaps with the fifth surface f5. Since a partition wall partitioning off an upper closed cross-section 23 and a lower closed cross-section 23 has a double structure, the bending strength of the beam member 20 is increased. As a result, the amount of energy absorbed by the beam member 20 is increased.

The invention can be summarized as follows based on the above description.

That is, as shown in FIG. 1, the impact absorbing member 10 for a vehicle is disposed on the outside in the lateral direction when the front-rear direction of the vehicle is defined as the longitudinal direction, the left-right direction is defined as the lateral direction, a side close to the center of gravity of the vehicle is defined as the inside, and a side far from the center of gravity is defined as the outside as viewed from the driver's seat; the impact absorbing member 10 for a vehicle includes the beam member 20 of which the closed cross-section is continuous in the longitudinal direction, and the corrugated sheet member 30 that is disposed side by side with the beam member 20 on the inside of the beam member 20; the corrugated sheet member 30 is formed of the plurality of single-wave members 33 each having a single wave and arranged side by side as shown in FIG. 3(b) or is formed of the multi-wave member 32 having the plurality of waves as shown in FIG. 3(a), and is disposed such that the ridge lines 31 passing through peaks of the waves extend in the lateral direction; and at least one of the beam member 20 and the corrugated sheet member 30 is made of a steel sheet.

Both or one of the beam member 20 and the corrugated sheet member 30 is made of a steel sheet. A steel sheet is sufficiently cheaper than an aluminum sheet.

Preferably, the beam member 20 has one closed cross-section 23 as shown in FIG. 2(f) or the plurality of closed cross-sections 23 as shown in FIG. 2(e). In a case where the beam member 20 has the plurality of closed cross-sections 23, the plurality of closed cross-sections 23 are arranged vertically.

According to this structure, the beam member 20 can be easily manufactured through the plastic deformation and welding of a thin blank material having a thickness of about 1 to 2 mm. In addition, since being thin, the beam member 20 can be reduced in weight while maintaining stiffness.

Preferably, as shown in FIG. 7(a), the height dimension Hp of the surface of the beam member 20 facing the corrugated sheet member 30 is set to be larger than the height dimension Hw of the surface of the corrugated sheet member 30 facing the beam member 20.

Since the corrugated sheet member 30 is embedded in the beam member 20 during a side collision as shown in FIG. 7(c), the movement of the beam member 20 in the vertical direction is suppressed.

Alternatively, as shown in FIG. 16, the height dimension Hp of the surface of the beam member 20 facing the corrugated sheet member 30 is set to be equal to the height dimension Hw of the surface of the corrugated sheet member 30 facing the beam member 20.

In a case where the height dimension Hp of the surface of the beam member 20 facing the corrugated sheet member 30 is set to be equal to the height dimension Hw of the surface of the corrugated sheet member 30 facing the beam member 20, a collision force applied to the beam member 20 can be smoothly transmitted to the corrugated sheet member 30.

Preferably, at least one of the upper openings 36 and the lower openings 37 of the corrugated sheet member 30 is closed by the panel (the upper panel 11, the lower panel 12) as shown in FIG. 4(c) and FIG. 4(d).

In a case where the closed cross-sections 23 are formed, the stiffness of the corrugated sheet member 30 can be increased.

Preferably, the beam member 20 is a structure that is formed by bending a single blank material 21 around and joining the blank material 21 to form at least one upper closed cross-section as shown in FIG. 2(a) to FIG. 2(f).

A closed cross-section structure is easily obtained. In addition, the beam member 20 can be easily manufactured.

Preferably, the beam member 20 is a structure that is formed by combining the plurality of formed panels 24 to 26 subjected to bending and joining the formed panels 24 to 26 to form at least one upper closed cross-section as shown in FIG. 11(a) and fig. 11 (b).

A closed cross-section structure is easily obtained. In addition, the beam member 20 can be easily manufactured.

Preferably, as shown in FIG. 8(a), there is provided the side sill structure 60 including: the impact absorbing member 10 for a vehicle of the invention; the upper panel 11 that extends from the upper portion of the corrugated sheet member 30 and is connected to the upper portion of the beam member 20; the lower panel 12 that closes the lower openings of the corrugated sheet member 30, extends in the lateral direction, and is connected to the lower portion of the beam member 20; the side sill 61 that surrounds the impact absorbing member 10 for a vehicle, the upper panel 11, and the lower panel 12; and the first bracket 64 that extends from the lower panel 12 or the upper panel 11 and is connected to the side sill 61, in which the impact absorbing member 10 for a vehicle is mounted on the side sill 61 by the first bracket 64.

Since the beam member 20 and the corrugated sheet member 30 are connected to each other by the upper panel 11 and the lower panel 12, the plastic deformation of the beam member 20 and the plastic deformation of the corrugated sheet member 30 can be made continuous during a side collision.

Preferably, as shown in FIG. 10(a), there is provided the side sill structure 60 including the impact absorbing member 10 for a vehicle of the invention and the side sill 61 that surrounds the impact absorbing member 10 for a vehicle, in which the side sill 61 includes the side sill outer 62 that is disposed on the outside and the side sill inner 63 that is disposed on the inside, the second bracket (the second bracket 72A for upper use or the second bracket 72B for lower use) extends from the corrugated sheet member (the upper corrugated sheet member 30A or the lower corrugated sheet member 30B), and the second bracket (the second bracket 72A for upper use or the second bracket 72B for lower use) is sandwiched at the joint portion 65 between the side sill outer 62 and the side sill inner 63, so that the corrugated sheet member (the upper corrugated sheet member 30A or the lower corrugated sheet member 30B) is mounted on the side sill 61.

The corrugated sheet member (the upper corrugated sheet member 30A or the lower corrugated sheet member 30B) is held in the side sill 61 via the second bracket (the second bracket 72A for upper use or the second bracket 72B for lower use).

The second bracket (the second bracket 72A for upper use or the second bracket 72B for lower use) is easily mounted by being merely sandwiched at the joint portion of the side sill 61.

Preferably, as shown in FIG. 10(a), there is provided the side sill structure 60 including the impact absorbing member 10 for a vehicle of the invention and the side sill 61 that surrounds the impact absorbing member 10 for a vehicle, in which the height dimension of the side sill 61 is at least twice the height dimension of the corrugated sheet member 30, the corrugated sheet member (upper corrugated sheet member 30A) is disposed on the outside of the vehicle body cross member 71 at the same height position as the vehicle body cross member 71 when the corrugated sheet member (upper corrugated sheet member 30A) is disposed in an upper portion of the side sill 61, and the corrugated sheet member (lower corrugated sheet member 30B) is disposed on the outside of the battery storage case 50 at the same height position as the battery storage case 50 when the corrugated sheet member (lower corrugated sheet member 30B) is disposed in a lower portion of the side sill 61.

Both the vehicle body cross member 71 and the battery storage case 50 are protected by one side sill structure 60.

Preferably, as shown in FIG. 14, the upper portion of the corrugated sheet member 30 is connected to the beam member 20 using the connecting members 40 (third tongue pieces 41). Meanwhile, the connecting members 40 may be the upper panel 11 shown in FIG. 1. Further, the connecting members 40 may be the tongue pieces 38 shown in FIG. 5.

The upper portion of the corrugated sheet member 30 and the beam member 20 can be reliably connected to each other by the connecting members 40.

Preferably, as shown in FIG. 17, the side sill structure 60 includes the impact absorbing member 10 for a vehicle and the side sill 61 that surrounds the impact absorbing member 10 for a vehicle. Further, the corrugated sheet member 30 is connected to the side sill 61 by the vehicle body connecting unit 75 (the flanged nut 69 and the long bolt 67). Meanwhile, the vehicle body connecting unit 75 may be the first bracket 64 shown in FIG. 8(a). Further, the vehicle body connecting unit 75 may be the second bracket 72B for lower use shown in FIG. 10(a). Furthermore, the vehicle body connecting unit 75 may be the weld metal 22 shown in FIG. 15(a) and FIG. 15(b).

The impact absorbing member 10 for a vehicle and the side sill 61 can be easily connected to each other by the vehicle body connecting unit 75.

### INDUSTRIAL APPLICABILITY

It is preferable that the impact absorbing member for a vehicle of the invention is built in the side sill.

### EXPLANATIONS OF LETTERS OR NUMERALS

- 10: IMPACT ABSORBING MEMBER FOR VEHICLE
- 11: UPPER PANEL
- 12: LOWER PANEL
- 20: BEAM MEMBER
- 21: BLANK MATERIAL
- 22: WELD METAL
- 23: CLOSED CROSS-SECTION
- 24: FIRST FORMED PANEL
- 25: SECOND FORMED PANEL
- 26: THIRD FORMED PANEL
- 30: CORRUGATED SHEET MEMBER
- 30A: UPPER CORRUGATED SHEET MEMBER
- 30B: LOWER CORRUGATED SHEET MEMBER
- 31: RIDGE LINE
- 32: MULTI-WAVE MEMBER
- 33: SINGLE-WAVE MEMBER
- 35: GROOVE-SHAPED BEAD
- 36: UPPER OPENING
- 37: LOWER OPENING
- 50: BATTERY STORAGE CASE
- 60: SIDE SILL STRUCTURE
- 61: SIDE SILL
- 62: SIDE SILL OUTER
- 62a: VERTICAL SIDE OF SIDE SILL OUTER
- 62b: HORIZONTAL SIDE OF SIDE SILL OUTER
- 63: SIDE SILL INNER
- 63a: VERTICAL SIDE OF SIDE SILL INNER
- 63b: HORIZONTAL SIDE OF SIDE SILL INNER
- 64: FIRST BRACKET
- 65: JOINT PORTION
- 71: VEHICLE BODY CROSS MEMBER
- 72A: SECOND BRACKET FOR UPPER USE
- 72B: SECOND BRACKET FOR LOWER USE
- 40: CONNECTING MEMBER
- 75: VEHICLE BODY CONNECTING UNIT
- Hb: HEIGHT DIMENSION OF SURFACE OF BEAM MEMBER FACING CORRUGATED SHEET MEMBER
- Hw: HEIGHT DIMENSION OF SURFACE OF CORRUGATED SHEET MEMBER FACING BEAM MEMBER

## Claims

1. An impact absorbing member for a vehicle that is disposed on an outside in a lateral direction when a front-rear direction of a vehicle is defined as a longitudinal direction, a left-right direction is defined as the lateral direction, a side close to a center of gravity of the vehicle is defined as an inside, and a side far from the center of gravity is defined as the outside as viewed from a driver's seat, the impact absorbing member for a vehicle comprising:
a beam member of which a closed cross-section is continuous in the longitudinal direction; and
a corrugated sheet member that is disposed side by side with the beam member on the inside of the beam member,
wherein the corrugated sheet member is formed of a plurality of single-wave members each having a single wave and arranged side by side or is formed of a multi-wave member having a plurality of waves, and is disposed such that ridge lines passing through peaks of the waves extend in the lateral direction, and
at least one of the beam member and the corrugated sheet member is made of a steel sheet.

2. The impact absorbing member for a vehicle according to claim 1,
wherein the beam member has one closed cross-section or a plurality of closed cross-sections, and
in a case where the beam member has a plurality of closed cross-sections, the plurality of closed cross-sections are arranged vertically.

3. The impact absorbing member for a vehicle according to claim 1,
wherein a height dimension of a surface of the beam member facing the corrugated sheet member is larger than or equal to a height dimension of a surface of the corrugated sheet member facing the beam member.

4. The impact absorbing member for a vehicle according to claim 1,
wherein at least one of upper openings and lower openings of the corrugated sheet member is closed by a panel.

5. The impact absorbing member for a vehicle according to claim 2,
wherein the beam member is a structure that is formed by bending a single blank material around and joining the blank material to form at least one closed cross-section.

6. The impact absorbing member for a vehicle according to claim 2,
wherein the beam member is a structure that is formed by combining a plurality of formed panels subjected to bending and joining the formed panels to form at least one upper closed cross-section.

7. The impact absorbing member for a vehicle according to claim 1,
wherein an upper portion of the corrugated sheet member is connected to the beam member using a connecting member.

8. A side sill structure comprising:
the impact absorbing member for a vehicle according to claim 7; and
a side sill that surrounds the impact absorbing member for a vehicle,
wherein the corrugated sheet member is connected to the side sill by a vehicle body connecting unit.

9. A side sill structure comprising:
the impact absorbing member for a vehicle according to claim 1; and
a side sill that surrounds the impact absorbing member for a vehicle,
wherein the side sill comprises a side sill outer that has a channel cross-section and is disposed on the outside, and a side sill inner that has an inverted channel cross-section and is disposed on the inside, and
the beam member faces a vertical side of the side sill outer, the corrugated sheet member faces a vertical side of the side sill inner, and the side sill structure is disposed along a pair of horizontal sides connected to the vertical sides.

10. A side sill structure comprising:
the impact absorbing member for a vehicle according to claim 1; and
a side sill that surrounds the impact absorbing member for a vehicle,
wherein a height dimension of the side sill is at least twice a height dimension of the corrugated sheet member,
the corrugated sheet member is disposed on the outside of a vehicle body cross member at the same height position as the vehicle body cross member when the corrugated sheet member is disposed in an upper portion of the side sill, and
the corrugated sheet member is disposed on the outside of a battery storage case at the same height position as the battery storage case when the corrugated sheet member is disposed in a lower portion of the side sill.
